# EUROPÄISCHE PATENTSCHRIFT

(11) **EP 2 226 657 B1**
(45) Veröffentlichungstag und Bekanntmachung des Hinweises auf die Patenterteilung: **21.11.2012**
(21) Anmeldenummer: 09154327.2
(22) Anmeldetag: 04.03.2009
(51) Int. Cl.: G02B 1/10, G02B 5/20, G02B 5/30

(54) **Optischer Filter mit Polyamid-Schutzschicht**
Optical filter with protective polyamide layer
Filtre optique avec couche protective de polyamide

(43) Veröffentlichungstag der Anmeldung: 08.09.2010
(73) Patentinhaber: EMS-PATENT AG, 7013 Domat / Ems (CH)
(72) Erfinder: Hala, Ralf, 88161 Lindenberg (DE)
(74) Vertreter: OK pat AG

(56) Entgegenhaltungen:
- EP-A- 1 217 397
- EP-A- 1 712 581
- WO-A-2009/012607
- US-A- 6 153 677
- "GRILAMID TR - A transparent polyamide with unlimited possibilities"[Online] Dezember 2003 (2003-12), XP002541395 Domat / Ems CH Gefunden im Internet: URL:www.mess-regeltechnik.at/LICO/Grilamed _prospekt_4007_e.pdf> [gefunden am 2009-08-04]

## Beschreibung

Die Erfindung betrifft einen optischen Filter, der zumindest eine optisch wirksame Schicht und zumindest eine aus der Lösung gegossene, unverstreckte Polyamid-Schutzschicht umfasst.

Optische Filter sind seit langem bekannt und werden beispielsweise als Passfilter, Komplementärfarbenfilter, Neutralfilter, IR-Sperrfilter oder UV-Sperrfilter eingesetzt. Anwendungen derartiger Filter sind z.B. aus der Photographie, der Lasertechnologie oder der Ophthalmologie bekannt. Es ist bekannt, dass derartige optische Filter leicht beschädigt werden können, deshalb werden diese bevorzugt auf einer oder auf beiden Seiten mit einer Schutzschicht versehen.

Funktionale optische Linsen sind beispielsweise aus EP 1 804 088 A2 bekannt. Diese umfassen eine extrudierte Polyamidschicht und eine optische Platte enthaltend eine Polyamid-Plattenschicht und eine optische Folienschicht, wobei die Polyamid-Plattenschicht bevorzugt eine verstreckte Polyamid-Platte enthält. Als Material für die optische Folienschicht wird Polyvinylalkohol, Acrylharz, Esterharz, Styrolharz, Polyvinylchlorid, Polyamid und Polycarbonat genannt. Sowohl die extrudierte Polyamidschicht als auch die Polyamid-Plattenschicht enthalten hauptsächlich Polyamide, bevorzugt sind dabei alicyclische Polyamide, z.B. "Trogamid CX 7323" und "Grilamid TR 90".

Aus EP 1 217 397 A2 ist ein polarisierendes Formteil bekannt, welches eine polarisierende Platte enthält, in welcher eine polarisierende Schicht zwischen zwei Schutzschichten angeordnet ist. Die einzelnen Schichten werden dabei unter Verwendung eines Klebstoffes miteinander verbunden. Die Schutzschicht wird durch Extrusion oder Giessen hergestellt. Als Material für die Schutzschicht werden u.a. Polycarbonat, Polyamid, Polyester, Polyurethan, Polystyrol, Polymethylmethacrylat, Polyvinylchlorid, Zellulosederivate genannt. Als Harze für das Giessen werden speziell Zellulosen, Polybisphenol-A-carbonat und Polymethylmethacrylat empfohlen und Acetylzellulose und Propylzellulose bevorzugt verwendet.

Die Aufgabe der vorliegenden Erfindung besteht darin, einen optischen Filter vorzuschlagen, der zumindest eine optisch wirksame Schicht und zumindest eine aus der Lösung gegossene, unverstreckte Polyamid-Schutzschicht umfasst.

Dabei ist der optische Filter mindestens aufgebaut aus einer Mittelschicht, der sogenannten optisch wirksamen Schicht, die auf beiden Seiten je eine Aussenschicht besitzt, die sogenannten Schutzschichten.

Diese Aufgabe wird mit einem optischen Filter gemäss dem unabhängigen Anspruch 1 erfüllt. Dieser erfindungsgemässe optische Filter umfasst zumindest eine optisch wirksame Schicht und zumindest eine aus der Lösung gegossene, unverstreckte Polyamid-Schutzschicht. Dieser erfindungsgemässe optische Filter ist unter anderem **dadurch gekennzeichnet, dass** die zumindest eine Polyamid-Schutzschicht aus PA MACMI/12 und optionalen Zuschlagstoffen besteht.

Diese optionalen Zuschlagstoffe sind ausgewählt aus einer Gruppe die anorganische und organische Stabilisatoren, Hitzestabilisatoren, Lichtstabilisatoren, UV-Stabilisatoren, UV-Absorber, UV-Blocker, IR-Absorber, NIR-Absorber, Antioxidantien, Antiozonantien, Nukleierungsmittel, Kristallisationsverzögerer, Entformungsmittel, Gleitmittel, Antiblockmittel, Trennmittel, organische und anorganische Pigmente, Farbstoffe, Kondensationskatalysatoren, Kettenregler, Entschäumer, kettenverlängernde Additive, Weichmacher, photochrome Additive, unmodifizierte und modifizierte, natürliche und synthetische Phyllosilicate und optische Aufheller umfasst.

Die optionalen Zuschlagstoffe können bei der Polyamidherstellung, der Folienherstellung oder bei beiden Herstellungen zugegeben werden.

Weitere erfinderische Merkmale und bevorzugte Ausführungsformen der Erfindung ergeben sich aus den abhängigen Ansprüchen.

Das Polyamid PA MACMI/12 für die erfindungsgemässe Polyamid-Schutzschicht besteht aus den drei Monomeren Bis-(3-methyl-4-amino-cyclohexyl)methan (MACM), Isophthalsäure (I) und Laurinlactam bzw. Lactam 12 (12) und eignet sich hervorragend zum Herstellen von Folien aus Lösung. Der Gehalt an Laurinlactam beträgt 23 Mol-% bis 57 Mol-%, besonders bevorzugt 31 Mol-% bis 55 Mol-%, ganz besonders bevorzugt 38 Mol-% bis 55 Mol-% jeweils bezogen auf das gesamte Polyamid.

Die optisch wirksame Schicht der erfindungsgemässen optischen Filter kann eine Schicht aus Polyvinylalkoholen, Polyvinylacetalen oder Polyvinylbutyralen oder Mischungen Polyamid sein. Der optische Filter kann eine oder mehrere optisch aktive Schichten enthalten. Optisch wirksame Schichten können orientiert und/oder dotiert sein. Bevorzugt sind optisch wirksame Schichten aus Polyvinylalkohol. Es ist einerseits bekannt, dass Polyamidschichten auf kompatiblen bzw. identischen Polyamidschichten sehr gut haften. Es hat sich andererseits überraschenderweise herausgestellt, dass die erfindungsgemässen, transparenten Polyamid-Schutzschichten sowohl mit Polyvinylalkoholfolien als auch mit Polyvinylacetalfolien, Polyvinylbutyralfolien oder mit Folien aus Mischungen aus beliebigen der drei Materialien eine sehr gute Haftung eingehen. So ist es möglich, die erfindungsgemässe, transparente Polyamid-Schutzschicht ohne Haftvermittler auf die optisch wirksame Schicht aufzubringen.

Ein optischer Filter kann eine oder zwei erfindungsgemässe, unverstreckte Polyamid-Schutzschichten umfassen. Ein derartiger optischer Filter kann ein Kantenfilter, Passfilter, Kurzpassfilter, Langpassfilter, Bandpassfilter, Komplementärfarbenfilter, IR-Sperrfilter, UV-Sperrfilter, Blendschutzfilter, Polarisationsfilter, Abblendungsfilter, Neutralfilter, Bandenfilter, Verlaufsfilter, Konversionsfilter, Korrekturfilter, Effektfilter oder eine beliebige Kombination dieser Filter sein. Bevorzugt ist ein derartiger optischer Filter in der Form eines Polarisationsfilters. Optische Bauteile mit einem solchen optischen Filter können als Beleuchtungsfilter, Filter für Laserscanner, Sensoren, Sicherheitsvorhänge, Brillengläser, Helmvisiere, Schutzbrillen, Sportbrillen, Linsen oder Filter für Projektionsgeräte, Linsen oder Filter für Messgeräte, oder als photographische Filter ausgebildet sein.

Ein solcher optischer Filter kann entweder in planparalleler Form oder nach einer Formgebung weiterverwendet werden. Durch Laminieren, Kaschieren, Hinterspritzen oder mit Spritzgusssonderverfahren können solche Filter durch Aufbringen zusätzlicher Beschichtungen weiterverarbeitet werden. Dabei ist es möglich, diese Beschichtungen sowohl mit als auch ohne Haftvermittlerschicht zu applizieren. Als weitere Möglichkeit kann der Haftvermittler bereits in das Material der Beschichtungen eingemischt sein. Bevorzugt werden die Beschichtungen ohne einen Haftvermittler auf die Polyamid-Schutzschicht aufgebracht.

Die Beschichtungen weisen eine Dicke von grösser 5 µm, bevorzugt 10 µm bis 15 mm, besonders bevorzugt 10 µm bis 10 mm auf. Bei einer Dicke von 5.1 µm bis 800 µm können die Beschichtungen als Schicht und bei einer Dicke von 801 µm bis 15 mm als Körper bezeichnet werden

Das Material für die Beschichtungen ist vorzugsweise chemisch kompatibel mit der Polyamid-Schutzschicht, dabei kann es sich um das Polyamid der Polyamid-Schutzschicht, ein anderes Polyamid, ein Polyamid-Blend, oder ein anderes Polymer handeln. Bei dem anderen Polymer kommen beispielsweise thermoplastische Polyurethane, duroplastische Polyurethane, Polyacrylate, Polyester oder Polycarbonate in Frage. Als Material für die Beschichtungen wird Polyamid bevorzugt. So ist die Schutzschicht aus PA MACMI/12 sehr gut beschichtbar mit Polyamid-Materialien wie PA MACM12, PA MACM14, PA MACM18, PA MACM36, PA MACM10/11, PA MACM10/1010, PA MACM10/1014, PA MACM14/1114, PA 61/6T/PACMI/PACMT/MACMI/MACMT/12, PA 12, PA 11, Polyesteramiden, Polyetheramiden, Polyetheresteramiden, PA PACM12/MACM12, PA PACM14/MACM14, PA PACM12, PA PACM14, PA PACM18, PA PACM36 oder PA MACMT/12. Die Beschichtungsmaterialien enthalten gegebenenfalls Zusatzstoffe, die aus den bereits für die Polyamid-Schutzschichten genannten Zusatzstoffen ausgewählt sind. Die Beschichtungsmaterialien können nach Bedarf ebenfalls mit optischen Filtereigenschaften versehen werden. Sowohl auf die Polyamid-Schutzschicht, als auch auf das Beschichtungsmaterial können weitere Schichten appliziert werden. Dabei kann es sich um optische Dünnschichten (Dicke kleiner 1 µm), optische Dünnfilme (Dicke 1 µm bis 5 µm ), weitere optische Filter oder Kombinationen davon handeln. Zu den Dünnschichten zählen zum Beispiel Antireflexschichten, Dekorationsschichten, Vergütungsschichten, Entspiegelungsschichten oder Verspiegelungsschichten. Zu den Dünnfilmen zählen zum Beispiel Hardcoats oder Antifoggingschichten.

### Allgemeine Herstellungsvorschrift für die Polyamide und der Folie daraus:

Die Herstellung der Polyamide erfolgt in bekannter Weise in bekannten rührbaren Druckautoklaven mit einem Vorlagegefäss und einem Reaktionsgefäss. Im Vorlagegefäss wird deionisiertes Wasser vorgelegt und die Monomere und Additive zugegeben. Danach wird mehrfach mit Stickstoff inertisiert. Unter Rühren wird auf 150 bis 230 °C unter dem sich einstellenden Druck aufgeheizt, um eine homogene Lösung zu erhalten. Diese Lösung wird durch ein Sieb in das Reaktionsgefäss gepumpt und dort auf die gewünschte Reaktionstemperatur von 260 bis 310 °C bei einem Druck von maximal 30 bar aufgeheizt. Der Ansatz wird in der Druckphase für 0.5 bis 4 Stunden auf der Reaktionstemperatur gehalten. In der anschliessenden Entspannungsphase wird der Druck innerhalb von 1 bis 4 Stunden auf atmosphärischen Druck reduziert, wobei die Temperatur leicht sinken kann. In der folgenden Entgasungsphase wird der Ansatz bei atmosphärischem Druck für 0.5 bis 3 Stunden auf einer Temperatur von 250 bis 340 °C gehalten. Die Polymerschmelze wird in Strangform ausgetragen, im Wasserbad bei 10 bis 80 °C abgekühlt und anschliessend granuliert. Das Granulat wird für 12 bis 48 Stunden bei 80 bis 120 °C unter Stickstoff oder im Vakuum auf einen Wassergehalt von unter 0.1 Gew.-% getrocknet.

Das Polyamid hat eine relative Viskosität (gemessen bei 20 °C in 0.5 Gew.-%-iger Lösung in m-Kresol) von 1.40 bis 2.00, bevorzugt von 1.45 bis 1.90, besonders bevorzugt 1.50 bis 1.80.

Die Herstellung der ungereckten aus der Lösung gegossenen Folie erfolgt in an sich bekannter Weise durch Auflösen des Polyamidgranulats oder -pulvers in einem Lösungsmittel mittels Rühren. Dies erfolgt bei Raumtemperatur oder erhöhter Temperatur. Bei erhöhter Temperatur ist auf darauf zu achten, dass etwaige Lösungsmitteldämpfe kondensiert und zurückgeführt werden. Die Konzentration der Lösung beträgt zwischen 10 und 40 Gew.-%. Die erhaltene klare Lösung wird auf einer Unterlage beispielsweise aus Metall, Glas oder Kunststoff ausgebracht. Die sich durch das Verdampfen des Lösungsmittelgemisches bildende Folie wird in einem Ofen, mit IR-Strahlern oder an der Luft getrocknet. Sie kann vor oder nach dieser Trocknung von der Unterlage abgelöst werden.

Das Lösungsmittel ist ausgewählt aus der Gruppe bestehend aus Methanol, Ethanol, Propanol, Butanol, Isopropanol, tert.-Butanol, Toluol, Xylol, m-Kresol, Ethylbenzol, Tetrahydrofuran, Furan, Methylenchlorid, 2-Chlortoluol, 4-Chlortoluol, Dioxan, N-Methyl-2-pyrrolidon, Dimethylsulfoxid, Ameisensäure und Kombinationen davon. Bevorzugt ist das Lösungsmittel ausgewählt aus der Gruppe bestehend aus Methanol/Methylenchlorid, Ethanol/Methylenchlorid, Isopropanol/Methylenchlorid, Ethanol/Methylenchlorid/Tetrahydrofuran, Methnol/Methylenchlorid/Tetrahydrofuran, Ameisensäure, Ethanol/ Methylenchlorid/Toluol, Ethanol/ Methylenchlorid/m-Kresol, Ethanol/ Methylenchlorid/m-Kresol, m-Kresol, Methanol/Methylenchlorid/m-Kresol, Ameisensäure/m-Kresol, N-Methyl-2-pyrrolidon/Methylenchlorid/m-Kresol, N-Methyl-2-pyrrolidon/m-Kresol, N-Methyl-2-pyrrolidon/Ameisensäure/m-Kresol, Ethylbenzol/m-Kresol, Ethylbenzol/Ameisensäure/m-Kresol, Ethanol/m-Kresol, Methanol/m-Kresol, 2-Chlortoluol/m-Kresol, 4-Chlortoluol/m-Kresol.

Die Dicke der aus Lösung gegossenen Polyamidfolie beträgt 20 bis 195 µm, bevorzugt 25 bis 185 µm, besonders bevorzugt 40 bis 180 µm, ganz besonders bevorzugt 70 bis 180 µm.

### In den Versuchsbeispielen verwendete Monomere:

- Isophthalsäure (I):: Schmelzpunkt 345 bis 348 °C, Sublimationstemperatur 100 °C bei 0.07 mmHg, Hersteller BP Amoco Chemicals
- Laurinlactam (12):: Schmelzpunkt 151 °C, Hersteller EMS-UBE Ltd.
- MACM :: Bis(3-methyl-4-amino-cyclohexyl)methan, Schmelzpunkt -7 bis -1 °C, Hersteller BASF AG

### Herstellungsbeispiel:

Im Folgenden wird die Herstellung eines erfindungsgemässen Copolyamids an Hand des in dem Beispiel Nr. 2 verwendeten PA MACMI/12 erläutert. Im Vorlagegefäss eines 300 I Druckautoklaven werden 42 kg deionisiertes Wasser vorgelegt und 39.88 kg Isophthalsäure sowie 50.05 kg Laurinlactam eingerührt. Danach werden 57.76 kg Bis-(3-methyl-4-aminocyclohexyl)methan (MACM), 0.015 kg Antifoam RD 10 Gew.-% Emulsion (Entschäumer, Hersteller Dow Corning) und zum Schluss 0.59 kg Benzoesäure zugegeben. Daraufhin wird wie folgt verfahren:
- Nach 10-maliger Inertisierung wird bis auf 190 °C aufgeheizt. Die homogene Lösung wird bei 190 °C durch ein Sieb in das Reaktionsgefäss gepumpt.
- Unter Rühren wird dort der Ansatz auf 280 °C aufgeheizt und 1.5 Stunden bei 20 bar in der Druckphase gehalten. Innerhalb von 2.5 Stunden wird auf atmosphärischen Druck entspannt und anschliessend bei 275 °C 2 Stunden entgast.
- Die Polymerschmelze wird ausgetragen, im Wasserbad (20 °C) abgekühlt und granuliert.
- Das Granulat wird bei 90 °C im Vakuum (30 mbar) auf einen Wassergehalt von unter 0.1 Gew.-% getrocknet.
- Die relative Viskosität des Produkts beträgt 1.58.

### Beispiel für die Folienherstelluna:

21 Gew.-% des Polyamids aus Beispiel Nr. 2 werden in Pulverform in einem auf 35 °C erhitzten Lösungsmittelgemisch aus Ethanol/Methylenchlorid/Tetrahydrofuran (Gewichtsverhältnis von 23:23:4) durch Rühren gelöst, wobei abdampfendes Lösungsmittel nach dem Kondensieren zurückgeführt wird. Der Lösevorgang wird bis zum Vorliegen einer vollkommen klaren Lösung fortgesetzt. Mit dieser Lösung wird bei Raumtemperatur mittels einer Rakel eine Giessfolie hergestellt, welche nach einigen Minuten der Ruhe bei 70 °C getrocknet wird. Die getrocknete Folie hatte eine Stärke von 180 µm.

### Zur Prüfung der Polyamide werden folgende Messvorschriften verwendet:

Haze: ASTM D 1003
   Rundplatte, Dicke 2 mm, Radius 37.5 mm
   Temperatur 23 °C
   Messgerät Haze Gard plus der Firma Byk Gardner mit CIE Lichtart C
   Der Haze-Wert wird in % der eingestrahlten Lichtmenge angegeben.
Schlagzähigkeit nach Charpy:
   ISO 179/*eU
   ISO-Prüfstab, Norm: ISO/CD 3167, Typ B1, 80 x 10 x 4 mm
   Temperatur 23 °C
   * 1 = nicht instrumentiert, 2 = instrumentiert
Kerbschlagzähigkeit nach Charpy:
   ISO 179/*eA
   ISO-Prüfstab, Norm: ISO/CD 3167, Typ B1, 80 x 10 x 4 mm
   Temperatur 23 °C
   * 1 = nicht instrumentiert, 2 = instrumentiert
Glasumwandlungstemperatur (Tg):
   ISO-Norm 11357-1/-2
   Granulat
   Die Differential Scanning Calorimetry (DSC) wurde mit einer Aufheizrate von 20 K/min durchgeführt. Als Glasumwandlungstemperatur wird die Temperatur am Onset angegeben.
Relative Viskosität:
   ISO 307
   0.5 Gew.-%-ige m-Kresollösung
   Temperatur 20 °C
   Berechnung der relativen Viskosität (RV) nach RV = t/t₀ in Anlehnung an Abschnitt 11 der Norm.

Die Prüfkörper werden auf einer Spritzgussmaschine der Firma Arburg, Modell Allrounder 420 C 1000-250 hergestellt. Dabei werden Zylindertemperaturen zwischen 240 und 290 °C verwendet. Die Formtemperatur beträgt 40 bis 80 °C. Bei den Platten für die optischen Messungen werden polierte Formen verwendet.

Die Prüfkörper für die Haze-Messung werden im trockenen Zustand verwendet, dazu werden sie nach dem Spritzguss mindestens 48 h bei Raumtemperatur in trockener Umgebung, d.h. über Silicagel gelagert. Die Prüfkörper für die Messung der Schlagzähigkeit und Kerbschlagzähigkeit werden nach ISO 1110 für 14 Tage bei 72 °C und 62 % relativer Feuchte konditioniert.

Falls spezielle Anforderungen in Bezug auf die Filmbeschaffenheit, insbesondere eine hohe Schlagzähigkeit und zugleich auch ein niedriger Haze-Wert, an die Polyamid-Schutzschicht gestellt werden, so wurde festgestellt, dass dafür ein ganz bestimmter Anteil des Laurinlactams vorhanden sein muss.

Wie aus der Tabelle 1 hervorgeht, erreichen Polyamid-Schutzschichten mit einem Anteil an Laurinlactam von 25 Mol-%, 35 Mol-% und 54 Mol-% bezogen auf das gesamte Polyamid sehr gute Werte.

**Tabelle 1**

| | | **Beispiel 1** | **Beispiel 2** | **Beispiel 3** |
|---|---|---|---|---|
| PA Komponenten | Einheit | | | |
| MACMI | Mol-% | 75 | 65 | 46 |
| Laurinlactam | Mol-% | 25 | 35 | 54 |
| | | | | |
| Messergebnisse | Einheit | | | |
| Haze | % | 0.78 | 0.62 | 0.96 |
| Schlagzähigkeit Charpy, 23 °C | kJ/m² | > 100 | > 100 | > 100 |
| Kerbschlagzähigkeit Charpy, 23 °C | kJ/m² | 6 | 8 | 9 |
| Glasumwandlungstemperatur | °C | 190 | 160 | 110 |
| relative Viskosität | - | 1.51 | 1.58 | 1.67 |

Alle erfindungsgemässen Beispiele 1-3 erreichen eine Schlagzähigkeit von über 100 kJ/m², eine Kerbschlagzähigkeit von über 5 kJ/m² und zudem einen Haze-Wert von weniger als 1. Die Glasübergangstemperatur ist im Beispiel 1 mit 190 °C besonders hoch, was für ein nachträgliches Hinterspritzen mit einem Polyamidkörper von grossem Vorteil ist. Die Glasübergangstemperatur der Polyamid-Schutzschicht im Beispiel 2 ist mit 160 °C noch gut und im Beispiel 3 mit 110 °C noch akzeptabel.

Wenn aber der Anteil an Laurinlactam unterhalb von 20 Mol-% oder oberhalb von 60 Mol-% bezogen auf das gesamte Polyamid in dieser Schutzschicht liegt, so werden wesentlich schlechtere Resultate erzielt, wie aus den Vergleichsbeispielen 4 und 5 in der Tabelle 2 ersichtlich ist.

**Tabelle 2**

| | | **Vergleichs-Beispiel 4** | **Vergleichs-Beispiel 5** |
|---|---|---|---|
| PA Komponenten | Einheit | | |
| MACMI | Mol-% | 80 | 39 |
| Laurinlactam | Mol-% | 19 | 61 |
| | | | |
| Messergebnisse | Einheit | | |
| Haze | % | 0.65 | 2.21 |
| Schlagzähigkeit Charpy, 23 °C | kJ/m² | 80 | >100 |
| Kerbschlagzähigkeit Charpy, 23 °C | kJ/m² | 4 | 9 |
| Glasumwandlungstemperatur | °C | 200 | 100 |
| relative Viskosität | - | 1.45 | 1.73 |

Das Vergleichsbeispiel 4 erreicht einen durchaus akzeptablen Haze-Wert von 0.65; die Schlagzähigkeit und auch die Kerbschlagzähigkeit sind aber zu gering, so dass dieses Material als zu spröde bezeichnet werden muss. Die Glasübergangstemperatur ist hingegen sehr hoch. Das Vergleichsbeispiel 5 zeigt eine gute Schlagzähigkeit und Kerbschlagzähigkeit; der Haze-Wert ist aber inakzeptabel hoch, so dass dieses Material als zu trübe bezeichnet werden muss. Zudem ist die Glasübergangstemperatur zu niedrig.

Bei einem Gehalt an Laurinlactam von 20 Mol-% bis 60 Mol-% bezogen auf das gesamte Polyamid erfüllt die zumindest eine Polyamid-Schutzschicht die Vorgaben, d.h. sie besitzt eine Schlagzähigkeit von über 100 kJ/m², eine Kerbschlagzähigkeit von über 5 kJ/m²und ein Haze-Wert von weniger als 1.

Des Weiteren wurde festgestellt, dass eine aus der Lösung gegossene, unverstreckte Polyamid-Schutzschicht aus PA MACMI/12 (Co-Polyamid aus Beispiel 2 aus MACM und Isophthalsäure mit einem Lactamgehalt von 35 Mol-%) einen grossen Vorteil betreffend der Isotropie gegenüber der Verwendung von Extrusionsfolien aus demselben Material bietet. Derselbe Vorteil lässt sich auch gegenüber einer Extrusionsfolie aus einem Homopolyamid PA MACM12 (enthält keine aromatische Dicarbonsäure) feststellen.

Zum Verifizieren des Vorteils einer aus der Lösung gegossenen Polyamid-Schutzschicht gegenüber einer Extrusionsfolie wurden jeweils eine PA MACMI/12 Giessfolie, eine PA MACMI/12 Extrusionsfolie und eine PA MACM12 Extrusionsfolie vermessen. Dazu wurden im Messstrahl eines Perkin Elmer, Lambda 35 UV/VIS-Spectrometer zwei Polarisationsfolien hintereinander, senkrecht zum Messstrahl angeordnet und soweit gegeneinander verdreht, dass die Lichttransmission das Minimum, die sogenannte Rest-Lichttransmission, erreicht. Zwischen diese gekreuzten Polarisationsfolien wurden nun nacheinander die verschiedenen auf einem Rahmen angebrachten Giess- und Extrusionsfolien parallel zu den Polarisationsfolien gehalten und die Lichttransmission bestimmt. In der Basisstellung wurde der Rahmen so fixiert, dass die Extrusionsrichtung der Folie vertikal verläuft. Von dieser Position ausgehend wurde der Rahmen mit der Folie um 90 ° bzw. um 45 ° gedreht und wieder die jeweiligen Lichttransmissionen bestimmt. Die Lichttransmission wurde bei drei verschiedenen Wellenlängen (480 nm, 588 nm und 644 nm) gemessen. Die Lichttransmission und die Rest-Lichttransmission werden in % des eingestrahlten Lichts angegeben.

Die Giess- und Extrusionsfolien aus Polyamid besitzen jeweils eine Dicke von 180 µm. Die Dicke der verwendeten Polarisationsfolien beträgt 30 µm. Sie bestehen aus Polyvinylalkohol.

In der Tabelle 3 sind die Messwerte zusammengestellt, die erreicht werden, wenn die Messungen bei einer Wellenlänge von 480 nm durchgeführt werden. Dabei beträgt die Rest-Lichttransmission bei gekreuzten Polarisationsfolien 0.089 %.

**Tabelle 3 Wellenlänge 480 nm**

| | PA MACMI/12 Giessfolie | PA MACMI/12 Extrusionsfolie | PA MACM12 Extrusionsfolie |
|---|---|---|---|
| Basisstellung | 0.096 % | 0.105 % | 0.437 % |
| Drehung um 90° | 0.091 % | 0.117 % | 0.172 % |
| Drehung um 45° | 0.099 % | 0.205 % | 0.236 % |

Es fällt auf, dass die erfindungsgemässe Giessfolie aus PA MACMI/12 die Lichttransmission bei 480 nm in der Basisstellung lediglich von 0.089 % auf 0.096 % erhöht. Der Unterschied in der Lichttransmission beträgt hier nur 0.007 %. Bei Drehung der Giessfolie um 90° sinkt die Lichttransmission auf 0.091 %. Bei Drehung um 45° steigt sie geringfügig auf 0.099 % an. Weil sich die Lichttransmission bei 480 nm in Abhängigkeit von der Stellung der Giessfolie nur um maximal 0.008% verändert, kann der Giessfolie aus PA MACMI/12 eine gute Isotropie attestiert werden. Allgemein gilt im Zusammenhang mit der vorliegenden Erfindung eine Polyamid-Schutzschicht als isotrop, wenn sich die Lichttransmissionen der drei Stellungen um maximal 0.013 %, bevorzugt um maximal 0.010 % unterscheiden.

Mit der Extrusionsfolie aus PA MACMI/12 erhöht sich die Lichttransmission bei 480 nm in der Basisstellung von 0.089 % auf 0.105 % bzw. um 0.016 %. Die Werte bei der Extrusionsfolie aus PA MACMI/12 variieren insgesamt sogar um bis zu 0.100 %. Noch ausgeprägter ist die Anisotropie mit der Extrusionsfolie aus dem Homopolymer PA MACM12, bei dem sich die Lichttransmission bei 480 nm in der Basisstellung von 0.089 % auf 0.437 % bzw. um 0.348 % erhöht. Die Werte mit der Extrusionsfolie aus PA MACM12 variieren insgesamt sogar um bis zu 0.265 %. Diese Anisotropie der Extrusionsfolien trägt zu einer unscharfen Abbildung bei.

In der Tabelle 4 sind die Messwerte zusammengestellt, die erreicht werden, wenn die Messungen bei einer Wellenlänge von 588 nm durchgeführt werden. Dabei beträgt die Rest-Lichttransmission bei gekreuzten Polarisationsfolien 0.053 %.

**Tabelle 4 Wellenlänge 588 nm**

| | PA MACMI/12 Giessfolie | PA MACMI/12 Extrusionsfolie | PA MACM12 Extrusionsfolie |
|---|---|---|---|
| Basisstellun | 0.187 | 0.197 | 0.285 |
| Drehun um 90° | 0.179 | 0.189 | 0.211 |
| Drehun um 45° | 0.177 | 0.207 | 0.366 |

Es fällt auf, dass die erfindungsgemässe Giessfolie aus PA MACMI/12 die Lichttransmission bei 588 nm in der Basisstellung von 0.053 % auf 0.187 % erhöht. Der Unterschied beträgt hier 0.134 %. Bei Drehung der Giessfolie um 90° sinkt die Lichttransmission auf 0.179 %. Bei Drehung um 45° sinkt sie auf 0.177 % an. Weil sich die Lichttransmission bei 588 nm in Abhängigkeit von der Stellung der Giessfolie nur um maximal 0.010 % unterscheidet, kann der Giessfolie aus PA MACMI/12 auch bei dieser Wellenlänge eine gute Isotropie attestiert werden.

Mit der Extrusionsfolie aus PA MACMI/12 erhöht sich die Lichttransmission bei 588 nm in der Basisstellung von 0.053 % auf 0.197 % bzw. um 0.144 %. Die Werte mit der Extrusionsfolie aus PA MACMI/12 variieren insgesamt um 0.019 % Noch ausgeprägter ist die Anisotropie mit der Extrusionsfolie aus dem Homopolymer PA MACM12, mit dem sich die Lichttransmission bei 588 nm in der Basisstellung der Polarisationsfolien von 0.053 % auf 0.285 % bzw. um 0.232 % erhöht. Die Werte mit der Extrusionsfolie aus PA MACM12 variieren insgesamt um 0.155 %. So dass die beiden durch Extrusion hergestellten Vergleichsfolien nur eine schlechte Isotropie aufweisen.

In der Tabelle 5 sind die Messwerte zusammengestellt, die erreicht werden, wenn die Messungen bei einer Wellenlänge von 644 nm durchgeführt werden. Dabei beträgt die Rest-Lichttransmission bei gekreuzten Polarisationsfolien 0.050 %.

**Tabelle 5 Wellenlänge 644 nm**

| | PA MACMI/12 Giessfolie | PA MACMI/12 Extrusionsfolie | PA MACM12 Extrusionsfolie |
|---|---|---|---|
| Basisstellung | 0.060 | 0.068 | 0.254 |
| Drehung um 90° | 0.069 | 0.083 | 0.102 |
| Drehung um 45° | 0.064 | 0.073 | 0.274 |

Es fällt auf, dass die erfindungsgemässe Giessfolie aus PA MACMI/12 die Lichttransmission bei 588 nm in der Basisstellung von 0.050 % auf 0.060 % erhöht. Der Unterschied beträgt hier nur 0.010 %. Bei Drehung der Giessfolie um 90° steigt die Lichttransmission auf 0.069 %. Bei Drehung um 45° steigt sie auf 0.064 % an. Weil sich die Lichttransmission bei 644 nm in Abhängigkeit von der Stellung der Giessfolie nur um maximal 0.009 % verändert, kann der Giessfolie aus PA MACMI/12 auch bei dieser Wellenlänge eine gute Isotropie attestiert werden.

Mit der Extrusionsfolie aus PA MACMI/12 erhöht sich die Lichttransmission bei 644 nm in der Basisstellung von 0.050 % auf 0.068 % bzw. um 0.018 %. Die Werte mit der Extrusionsfolie aus PA MACMI/12 variieren insgesamt um 0.015 %. Noch ausgeprägter ist die Anisotropie mit der Extrusionsfolie aus dem Homopolymer PA MACM12, mit der sich die Lichttransmission bei 644 nm in der Basisstellung von 0.050 % auf 0.254 % bzw. um 0.204 % erhöht. Die Werte mit der Extrusionsfolie aus PA MACM12 variieren insgesamt um 0.172 %.

Kontrollversuche haben ergeben, dass sich aus PA MACM 12, das auch als "GRILAMID TR 90" (EMS-CHEMIE AG) bekannt ist, keine Giessfolien herstellen lassen, zum einen weil keine klare Lösung erreichbar ist, zum anderen weil die Lösung instabil ist, d.h., dass die Lösung innerhalb kurzer Zeit eindickt und sich Klumpen bilden.

### Vorteile der erfindungsgemässen optischen Filter umfassen:

- Die vorgeschlagenen, aus der Lösung gegossenen und unverstreckten Polyamid-Schutzschichten aus PA MACMI/12 können mit konstanter Dicke in wenigen Arbeitsschritten hergestellt werden;
- Eine einfache Variation der Glasübergangstemperatur wird durch Veränderung des Laurinlactamgehalts möglich;
- Die vorgeschlagenen Polyamid-Schutzschichten zeigen eine gute optische Isotropie, die wesentlich besser ist als diejenige von Extrusionsfolien;
- Die vorgeschlagenen Polyamid-Schutzschichten aus PA MACMI/12 sind von hoher optischer Qualität (betreffend Gehalt an Gelteilchen, Einschlüssen, Staubpartikeln, usw.) und zeigen niedrige Haze-Werte;
- Zwischen der Folie aus Polyvinylalkohol, Polyvinylacetalen, Polyvinylbutyralen oder Mischungen davon und der Polyamid-Schutzschicht besteht eine sehr gute Haftung auch ohne Haftvermittlerschicht;
- Zwischen der Polyamid-Schutzschicht und dem zusätzlich applizierten Polyamid besteht eine sehr gute Haftung auch ohne Haftvermittlerschicht;
- Die Polyamid-Schutzschicht zeigt eine sehr gute chemische Beständigkeit;
- Die Polyamid-Schutzschicht zeigt eine sehr gute Spannungsrissbeständigkeit;
- Die Polyamid-Schutzschicht besitzt eine sehr gute Abbd-Zahl (40 - 55);
- Die Polyamid-Schutzschicht zeigt einen sehr guten Brechungsindex n_{D}²⁰ (1.50 - 1.60).

## Patentansprüche

1. Optischer Filter, der zumindest eine optisch wirksame Schicht und auf beiden Seiten eine Schutzschicht umfasst, wobei zumindest eine der Schutzschichten eine aus der Lösung gegossene, unverstreckte Polyamid-Schutzschicht ist, **dadurch gekennzeichnet, dass** die zumindest eine Polyamid-Schutzschicht aus PA MACMI/12 und optionalen Zuschlagstoffen besteht, wobei die zumindest eine Polyamid-Schutzschicht einen Gehalt an Laurinlactam von 23 Mol-% bis 57 Mol-% bezogen auf das gesamte Polyamid aufweist, wobei die optisch wirksame Schicht aus Polyvinylalkohol, Polyvinylacetal, Polyvinylbutyral oder Mischungen davon besteht, und wobei der optische Filter keine Haftvermittlerschicht zwischen der zumindest einen Polyamid-Schutzschicht und der optisch wirksamen Schicht umfasst.

2. Optischer Filter nach Anspruch 1, **dadurch gekennzeichnet, dass** die zumindest eine Polyamid-Schutzschicht einen Gehalt an Laurinlactam von 31 Mol-% bis 55 Mol-%, bevorzugt einen Gehalt an Laurinlactam von 38 Mol-% bis 55 Mol-%, jeweils bezogen auf das gesamte Polyamid aufweist.

3. Optischer Filter nach einem der vorhergehenden Ansprüche, **dadurch gekennzeichnet, dass** die zumindest eine Polyamid-Schutzschicht als Polyamidgiessfolie mit einer Dicke von 20 bis 195 µm, bevorzugt von 25 bis 185 µm, besonders bevorzugt von 40 bis 180 µm, ausgebildet ist.

4. Optischer Filter nach einem der vorhergehenden Ansprüche, **dadurch gekennzeichnet, dass** der optische Filter eine oder zwei Polyamid-Schutzschichten umfasst.

5. Optischer Filter nach einem der vorhergehenden Ansprüche, **dadurch gekennzeichnet, dass** die optisch wirksame Schicht aus Polyvinylalkohol besteht.

6. Optischer Filter nach einem der vorhergehenden Ansprüche, **dadurch gekennzeichnet, dass** er auf einer oder beiden Seiten mit einer Beschichtung versehen ist.

7. Optischer Filter nach Anspruch 6, **dadurch gekennzeichnet, dass** das Material für die Beschichtung ein Polyamid, Polyamid-Blend oder Polymer ist.

8. Optischer Filter nach Anspruch 7, **dadurch gekennzeichnet, dass** auf die Beschichtung und/oder auf die Polyamid-Schutzschicht optische Dünnschichten, optische Dünnfilme, weitere optische Filter oder Kombinationen davon appliziert sind.

9. Optischer Filter nach Anspruch 8, **dadurch gekennzeichnet, dass** die optischen Dünnschichten bzw. optischen Dünnfilme ausgewählt sind aus der Gruppe, die Antireflexschichten, Dekorationsschichten, Vergütungsschichten, Entspiegelungsschichten, Verspiegelungsschichten, Hardcoats, und Antifoggingschichten umfasst.

10. Optischer Filter nach einem der vorhergehenden Ansprüche, **dadurch gekennzeichnet, dass** die optionalen Zuschlagstoffe nach Erfordernis ausgewählt sind aus einer Gruppe, die anorganische und organische Stabilisatoren, Hitzestabilisatoren, Lichtstabilisatoren, UV-Stabilisatoren, UV-Absorber, UV-Blocker, IR-Absorber, NIR-Absorber, Antioxidantien, Antiozonantien, Nukleierungsmittel, Kristallisationsverzögerer, Entformungsmittel, Gleitmittel, Antiblockmittel, Trennmittel, organische und anorganische Pigmente, Farbstoffe, Kondensationskatalysatoren, Kettenregler, Entschäumer, kettenverlängernde Additive, Weichmacher, photochrome Additive, unmodifizierte und modifizierte, natürliche und synthetische Phyllosilicate und optische Aufheller umfasst.

11. Optisches Bauteil mit einem optischen Filter nach einem der vorhergehenden Ansprüche, **dadurch gekennzeichnet, dass** dieses Bauteil, ein Beleuchtungsfilter, ein Filter für Laserscanner, ein Sensor, ein Sicherheitsvorhang, ein Brillenglas, ein Helmvisier, eine Schutzbrille, eine Sportbrille, eine Linse oder ein Filter für ein Projektionsgerät, eine Linse oder ein Filter für ein Messgerät, oder ein photographischer Filter ist.

## Claims

1. An optical filter, which comprises at least one optically active layer and on both sides a protective layer, at least one of the protective layers being an unstretched polyamide protective layer which is cast from the solution, **characterized in that** the at least one polyamide protective layer consists of PA MACMI/12 and optional additives, the at least one polyamide protective layer having a content of laurin lactam of 23 mol-% to 57 mol-% in relation to the total polyamide, the optically active layer consisting of polyvinyl alcohol, polyvinyl acetal, polyvinyl butyral, or mixtures thereof, and the optical filter not comprising an adhesion promoting layer between the at least one polyamide protective layer and the optically active layer.

2. The optical filter according to Claim 1, **characterized in that** the at least one polyamide protective layer has a content of laurin lactam of 31 mol-% to 55 mol-%, preferably a content of laurin lactam of 38 mol-% to 55 mol-%, respectively in relation to the total polyamide.

3. The optical filter according to one of the preceding claims, **characterized in that** the at least one polyamide protective layer is implemented as a polyamide cast film having a thickness of 20 to 195 µm, preferably 25 to 185 µm, particularly preferably 40 to 180 µm.

4. The optical filter according to one of the preceding claims, **characterized in that** the optical filter comprises one or two polyamide protective layers.

5. The optical filter according to one of the preceding claims, **characterized in that** the optically active layer consists of polyvinyl alcohol.

6. The optical filter according to one of the preceding claims, **characterized in that** it is provided on one or both sides with a coating.

7. The optical filter according to Claim 6, **characterized in that** the material for the coating is a polyamide, polyamide blend, or polymer.

8. The optical filter according to Claim 7, **characterized in that** optical thin layers, optical thin films, further optical filters, or combinations thereof are applied to the coating and/or to the polyamide protective layer.

9. The optical filter according to Claim 8, **characterized in that** the optical thin layers or optical thin films, respectively, are selected from the group which comprises antireflective layers, decorative layers, lens coatings, antireflection layers, reflective layers, hard coats, and anti-fogging layers.

10. The optical filter according to one of the preceding claims, **characterized in that** the optional additives are selected as needed from a group which comprises inorganic and organic stabilizers, heat stabilizers, light stabilizers, UV stabilizers, UV absorbers, UV blockers, IR absorbers, NIR absorbers, antioxidants, anti-ozone agents, nucleation agents, crystallization retarders, demolding agents, lubricants, anti-blocking agents, releasing agents, organic and inorganic pigments, colorants, condensation catalysts, chain regulators, defoaming agents, chain-lengthening additives, softeners, photochromic additives, unmodified and modified, natural, and synthetic phyllosilicates, and optical brighteners.

11. An optical component having an optical filter according to one of the preceding claims, **characterized in that** this component is a lighting filter, a filter for a laser scanner, a sensor, a safety curtain, a spectacle lens, a helmet visor, protective spectacles, sports spectacles, a lens or a filter for a projection device, a lens or a filter for a measuring device, or a photographic filter.

## Revendications

1. Filtre optique comprenant au moins une couche optiquement efficace et une couche protectrice des deux côtés, au moins une des couches protectrices étant une couche protectrice de polyamide non étirée coulée d'une solution, **caractérisé en ce que** la au moins une couche protectrice de polyamide est composée de PA MACMI/12 et d'additifs optionnels, la au moins une couche protectrice de polyamide présentant une teneur en lactame laurique allant de 23 mole pour cent à 57 mole pour cent rapportée au total de polyamide, la couche optiquement efficace étant composée d'alcool polyvinylique, de polyvinylacétal, de polyvinylbutyral ou de mélanges de ces derniers, et le filtre optique ne comprenant aucune couche d'agent adhésif entre la au moins une couche protectrice de polyamide et la couche optiquement efficace.

2. Filtre optique selon la revendication 1, **caractérisé en ce que** la au moins une couche protectrice de polyamide présente une teneur en lactame laurique allant de 31 mole pour cent à 55 mole pour cent, de préférence une teneur en lactame laurique allant de 38 mole pour cent à 55 mole pour cent rapportée au total de polyamide.

3. Filtre optique selon l'une des revendications précédentes, **caractérisé en ce que** la au moins une couche protectrice de polyamide est réalisée sous la forme d'une feuille coulée de polyamide avec une épaisseur comprise entre 20 et 195 µm, de préférence entre 25 et 185 µm, de façon particulièrement préférée entre 40 et 180 µm.

4. Filtre optique selon l'une des revendications précédentes, **caractérisé en ce que** le filtre optique comprend une ou deux couches protectrices de polyamide.

5. Filtre optique selon l'une des revendications précédentes, **caractérisé en ce que** la couche optiquement efficace est composée d'alcool polyvinylique.

6. Filtre optique selon l'une des revendications précédentes, **caractérisé en ce qu'**il est muni d'un revêtement sur un ou sur les deux côtés.

7. Filtre optique selon la revendication 6, **caractérisé en ce que** le matériau pour le revêtement est un polyamide, un mélange de polyamide ou un polymère.

8. Filtre optique selon la revendication 7, **caractérisé en ce qu'**il est appliqué sur le revêtement et/ou sur la couche protectrice de polyamide des couches minces optiques, des films minces optiques, d'autres filtres optiques ou des combinaisons de ces derniers.

9. Filtre optique selon la revendication 8, **caractérisé en ce que** les couches minces optiques ou les films minces optiques sont sélectionnés à partir du groupe composé des couches antireflet, des couches décoratives, des couches de traitement par trempe et revenu, des couches non réfléchissantes, des couches réfléchissantes, des revêtements durs et des couches antibuée.

10. Filtre optique selon l'une des revendications précédentes, **caractérisé en ce que** les additifs optionnels sont sélectionnés suivant les besoins à partir d'un groupe comprenant des stabilisateurs inorganiques et organiques, des stabilisateurs thermiques, des stabilisateurs de lumière, des stabilisateurs UV, des absorbeurs UV, des bloqueurs UV, des absorbeurs IR, des absorbeurs NIR, des antioxydants, des agents anti-ozone, des agents de nucléation, des retardateurs de cristallisation, des agents de démoulage, des lubrifiants, des agents antibloquants, des agents de séparation, des pigments organiques et inorganiques, des colorants, des catalyseurs de condensation, des régulateurs de chaîne, des agents antimoussant, des agents d'extension de chaîne, des plastifiants, des additifs photochromes, des phyllosilicates non modifiés et modifiés, naturels et synthétiques et des agents d'azurage optiques.

11. Composant optique comprenant un filtre optique selon l'une des revendications précédentes, **caractérisé en ce que** ce composant est un filtre d'éclairage, un filtre pour les scanners laser, un capteur, un écran de sécurité, un verre de lunette, une visière de casque, des lunettes de protection, des lunettes de sport, un objectif ou un filtre pour un appareil de projection, un objectif ou un filtre pour un appareil de mesure ou un filtre photographique.
